# EUROPEAN PATENT APPLICATION

(11) **EP 4 826 905 A1**
(43) Date of publication of application: **21.10.2026**
(21) Application number: 25873746.9
(22) Date of filing: 11.09.2025
(51) Int. Cl.: H01M 50/682, H01M 50/502, A62C 3/16, A62C 35/10, A62D 1/00, H01M 50/178, H01M 50/342, H01M 10/04, H01M 50/249

(54) **BATTERY MODULE**

(30) Priority: 24.09.2024 KR 20240129060
(71) Applicant: LG Energy Solution, Ltd., Seoul 07335 (KR)
(72) Inventor: JEONG, Dong-Ik, Daejeon 34122 (KR); KIM, Soo-Youl, Daejeon 34122 (KR)
(74) Representative: BCKIP Part mbB
(86) International application number: PCT/KR2025/014153
(87) International publication number: WO 2026/071576

(57) **Abstract**

Disclosed is a battery module. The battery module includes a frame providing a space therein; a battery cell located inside the frame and including an accommodation portion configured to accommodate an electrode assembly and an electrode lead configured to protrude from the accommodation portion; a bus bar frame assembly located inside the frame and electrically connected to the battery cell; and a fire extinguishing pad located between the bus bar frame assembly and the accommodation portion.

## Description

### TECHNICAL FIELD

The present disclosure relates to a battery module.

The present application claims priority to Korean Patent Application No. 10-2024-0129060 filed on September 24, 2024 in the Republic of Korea, the disclosures of which are incorporated herein by reference.

### BACKGROUND ART

As the demand for portable electronic products such as smartphones, tablet PCs, and smart watches increases significantly and electric vehicles become increasingly widespread, research is actively being conducted on batteries installed the portable electronic products, especially secondary batteries that can be repeatedly charged and discharged.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be called a battery cell. In addition, multiple battery modules may be connected to each other to form a battery pack.

However, if a plurality of battery modules are included in the battery pack as above and each battery module includes a plurality of battery cells, the battery pack may be vulnerable to a thermal chain reaction between battery modules or between battery cells. For example, if an event such as thermal runaway occurs inside one battery module, the thermal runaway needs to be prevented from propagating to other battery modules or other battery cells. If thermal runaway propagation between battery modules or battery cells is not properly prevented, an event occurring in a specific battery module or battery cell may cause a chain thermal reaction in other battery modules or other battery cells, which may cause an explosion or fire or enlarge the scale thereof.

In particular, if an event such as thermal runaway occurs in a battery module, gas or flame may be randomly discharged to the outside. At this time, if the discharge of gas or flame is not properly controlled, gas or flame may be discharged toward another battery module, which may cause a thermal chain reaction in other battery modules. In particular, a module terminal may exist at the front side of the battery module, and a component such as a module bus bar may exist for electrical connection with another battery module or battery pack. Accordingly, if flame is discharged to the front side of the battery module, the module terminal may be damaged inside the battery pack, causing an electrical short. In addition, since another battery module may exist at the front side of the battery module, if flame is discharged to the front side of a specific battery module, the discharged flame may be directed to another battery module, which may easily cause a fire to spread between battery modules.

If the thermal propagation between battery modules or battery cells is not properly controlled, the voltage drop of the battery module or battery pack may occur rapidly. This may cause a sudden shutdown of a device equipped with the battery module or battery pack, resulting in unexpected damage. For example, if a voltage drop of the battery pack occurs suddenly while an electric vehicle is in operation, it is impossible to secure sufficient time to move the electric vehicle to a safe location.

Moreover, if a fire or explosion occurs suddenly due to failure to properly control thermal propagation between battery modules or battery cells, there is a high possibility of causing casualties to users. For example, when thermal runaway occurs in an electric vehicle, if a certain amount of time is not secured before it progresses to a full-blown fire, the occupants may not be able to escape safely.

### DISCLOSURE

### Technical Problem

The present disclosure is designed to solve the problems of the related art, and therefore the present disclosure is directed to providing a battery module having an improved structure to appropriately control the emission of flame, etc. generated inside the battery module, and a battery pack and a vehicle including the same.

The present disclosure is also directed to providing a battery module capable of rapidly introducing a fire extinguishing member into a battery cell when a thermal event occurs.

The present disclosure is also directed to providing a battery module that may rapidly inject a fire extinguishing member into the battery cell by arranging a fire extinguishing pad in the flow path of a venting gas when a thermal event occurs.

However, the technical problems that the present disclosure seeks to solve are not limited to the above, and other problems not mentioned herein will be clearly understood by those skilled in the art from the following disclosure.

### Technical Solution

In one aspect of the present disclosure, there is provided a battery module comprising: a frame providing a space therein; a battery cell located inside the frame and including an accommodation portion configured to accommodate an electrode assembly and an electrode lead configured to protrude from the accommodation portion; a bus bar frame assembly located inside the frame and electrically connected to the battery cell; and a fire extinguishing pad located between the bus bar frame assembly and the accommodation portion.

In addition, the fire extinguishing pad may include a case providing a space therein; and a fire extinguishing member located within the case.

In addition, the fire extinguishing member may be configured as a capsule.

In addition, the case may contain a flexible material.

In addition, the fire extinguishing pad may have a hole, and the electrode lead may pass through the hole.

In addition, the battery cell may be provided in plurality, and the electrode leads of the plurality of battery cells may pass through the fire extinguishing pad.

In addition, the frame may include a top plate located on the battery cell, and the fire extinguishing pad may extend between the top plate and the battery cell.

In addition, the top plate may have a top venting hole that exposes the fire extinguishing pad.

In addition, the battery module may further comprise an end cover coupled to the frame to cover the bus bar frame assembly and having an end venting hole.

A battery pack according to another aspect of the present disclosure includes the battery module according to the present disclosure.

A vehicle according to still another aspect of the present disclosure includes the battery module according to the present disclosure.

### Advantageous Effects

According to at least one of the embodiments of the present disclosure, when gas or flame is generated inside the battery module, the emission of such gas or flame may be appropriately controlled.

According to at least one of the embodiments of the present disclosure, the electrical safety of a battery module may be improved.

According to at least one of the embodiments of the present disclosure, heat propagation may be suppressed.

According to at least one of the embodiments of the present disclosure, the transmission of a thermal event due to a flame or gas outside the battery module may be suppressed.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery module according to an embodiment of the present disclosure.
FIG. 2 is an exploded view showing some components of the battery module of FIG. 1.
FIG. 3 is a drawing showing a fire extinguishing pad of FIG. 2.
FIG. 4 is a drawing showing that the fire extinguishing pad of FIG. 3 is folded.
FIG. 5 is a cross-sectional view taken along the line C-C' of FIG. 4.
FIGS. 6 and 7 are drawings showing that a bus bar frame assembly and a battery cell are coupled.
FIG. 8 is a cross-sectional view taken along the line A-A' of FIG. 1.
FIG. 9 is a diagram showing the change in FIG. 8 when a thermal event occurs.
FIG. 10 is a cross-sectional view taken along the line B-B' of FIG. 1.
FIG. 11 is a diagram showing the change in FIG. 10 when a thermal event occurs.
FIG. 12 is a drawing showing a modified embodiment of FIG. 1.
FIG. 13 is a drawing showing another modified embodiment of FIG. 1.
FIG. 14 is an exploded view showing some components of a battery pack according to an embodiment of the present disclosure.
FIG. 15 is a diagram showing a battery pack according to an embodiment of the present disclosure.
FIG. 16 is a diagram showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

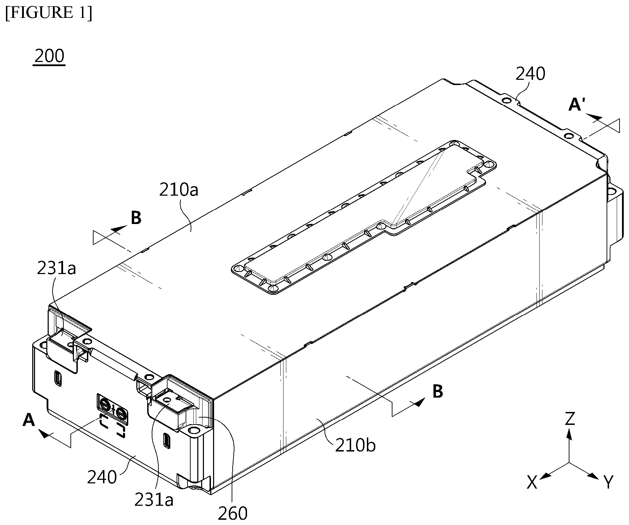

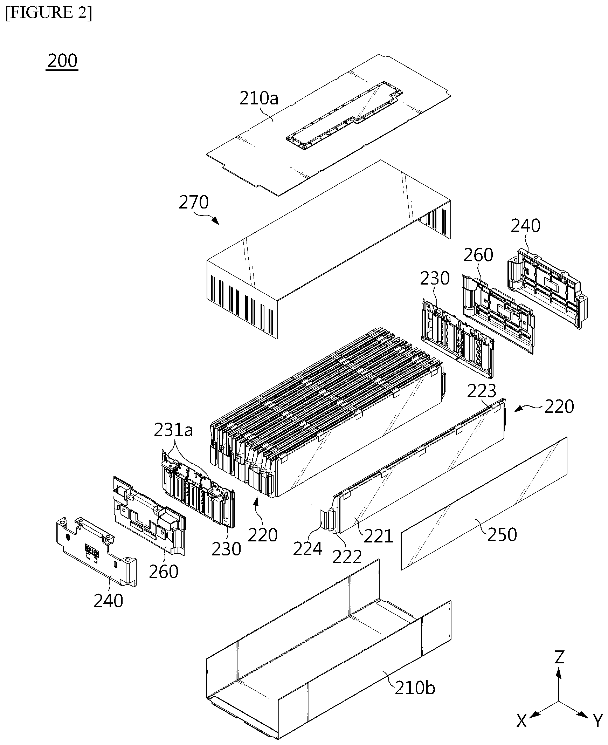

FIG. 1 is a diagram showing a battery module 200 according to an embodiment of the present disclosure. FIG. 2 is an exploded view showing some components of the battery module 200 of FIG. 1.

Referring to FIGS. 1 and 2, the battery module 200 may include a frame 210. The frame 210 may form the outer appearance of the battery module 200. The battery module 200 may have a rectangular parallelepiped shape. The frame 210 may include a top plate 210a and a lower frame 210b. The frame 210 may provide a space therein. The lower frame 210b may have a bottom plate and a pair of side plates. The top plate 210a may be installed, fastened, coupled, fixed, or attached to the pair of side plates. For example, the top plate 210a may be coupled to the lower frame 210b by welding. The frame 210 may have open front and rear sides.

The battery module 200 may include a battery cell 220. The battery cell 220 may be accommodated inside the frame 210. The battery cell 220 may refer to a secondary battery. In particular, the battery cell 220 may be a pouch-type secondary battery. However, the shape of the battery cell 220 is not limited to a pouch shape, and the battery cell 220 may have various shapes such as a cylindrical shape or a rectangular parallelepiped shape. The battery cell 220 may be provided in plurality.

The plurality of battery cells 220 may be stacked along the right and left direction or the Y-axis direction. The battery cell 220 may include an accommodation portion 221 that accommodates an electrode assembly, a first sealing portion 222 protruding to the front and rear of the accommodation portion 221, and a second sealing portion 223 protruding to the top of the accommodation portion 221. Also, the battery cell 220 may include electrode leads 224 protruding to the front and rear of the first sealing portion 222, respectively. Each battery cell 220 may extend along the front and rear direction or the X-axis direction. The electrode leads 224 may protrude to the front and rear of each battery cell 220, respectively.

The bus bar frame assembly 230 may be provided at the front and rear sides of the plurality of battery cells 220, respectively. The bus bar frame assembly 230 may be electrically connected to the electrode leads 224 of the plurality of battery cells 220.

The bus bar frame assembly 230 may include a bus bar frame 231. The bus bar frame assembly 230 may include a bus bar 232. The bus bar 232 may be installed on the bus bar frame 231. The bus bar 232 of the front bus bar frame assembly 230 may be installed on the front surface of the bus bar frame 231. The bus bar 232 of the rear bus bar frame assembly 230 may be installed on the rear surface of the bus bar frame 231.

The front bus bar frame assembly 230 may include a power terminal 231a. The power terminal 231a may be electrically connected to the plurality of battery cells 220. The power terminal 231a may be provided as a pair. The power terminal 231a may be exposed to the outside of the battery module 200. The power terminal 231a may be electrically connected to another battery module or a BMS (Battery Management System).

The fire extinguishing pad 270 may be located between the bus bar frame assembly 230 and the accommodation portion 221. The fire extinguishing pad 270 may face the inner surface of the bus bar frame assembly 230. The fire extinguishing pad 270 may face the rear surface of the bus bar frame 231 of the front bus bar frame assembly 230. The fire extinguishing pad 270 may face the front surface of the bus bar frame 231 of the rear bus bar frame assembly 230. The fire extinguishing pad 270 may include a fire extinguishing member 272 therein.

The fire extinguishing pad 270 may supply the fire extinguishing member 272 when a thermal event occurs. When a thermal event occurs, the battery cell 220 may discharge the venting gas G. The venting gas G may damage or melt a portion of the fire extinguishing pad 270. By damaging or melting the fire extinguishing pad 270, the fire extinguishing pad 270 may supply the fire extinguishing member 272.

Referring to FIGS. 1 and 2, the battery module 200 may include a pad 250. The pad 250 may be arranged between the plurality of battery cells 220. The pad 250 may be positioned between at least some of the battery cells 220 and/or at the periphery of the stack. For example, the pad 250 may be configured to be positioned between every four battery cells 220 stacked in the right and left direction.

The pad 250 may contain an elastic material to enable swelling absorption of the battery cell 220. For example, the pad 250 may be made of a foam material such as polyurethane. Alternatively, the pad 250 may contain a material capable of blocking heat or flames. For example, the pad 250 may contain an insulating or fire-retardant material such as silicone or mica.

The end cover 240 may be coupled to the front and rear sides of the frame 210, respectively. The end cover 240 may form the outer appearance of the battery module 200. The front end cover 240 may cover the front surface of the frame 210. The front end cover 240 may have a square shape.

The rear end cover 240 may be coupled to the rear of the frame 210. The rear end cover 240 may cover the rear surface of the frame 210. The rear end cover 240 may have a square shape.

The insulation cover 260 may be provided as a pair. The front insulation cover 260 may be located between the front end cover 240 and the front bus bar frame assembly 230. The front insulation cover 260 may electrically insulate the front bus bar frame assembly 230 and the front end cover 240.

The rear insulation cover 260 may be located between the rear end cover 240 and the rear bus bar frame assembly 230. The rear insulation cover 260 may electrically insulate the rear bus bar frame assembly 230 and the rear end cover 240.

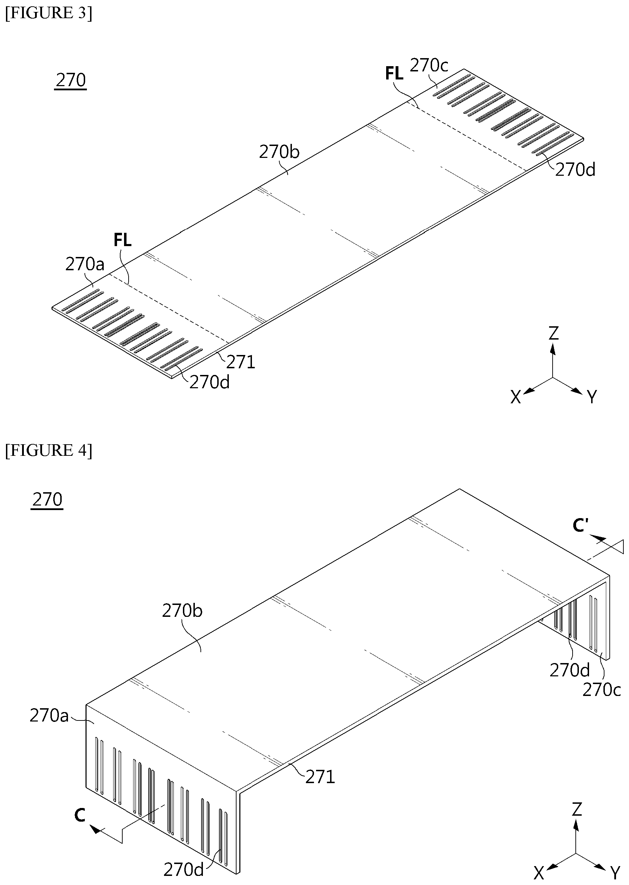

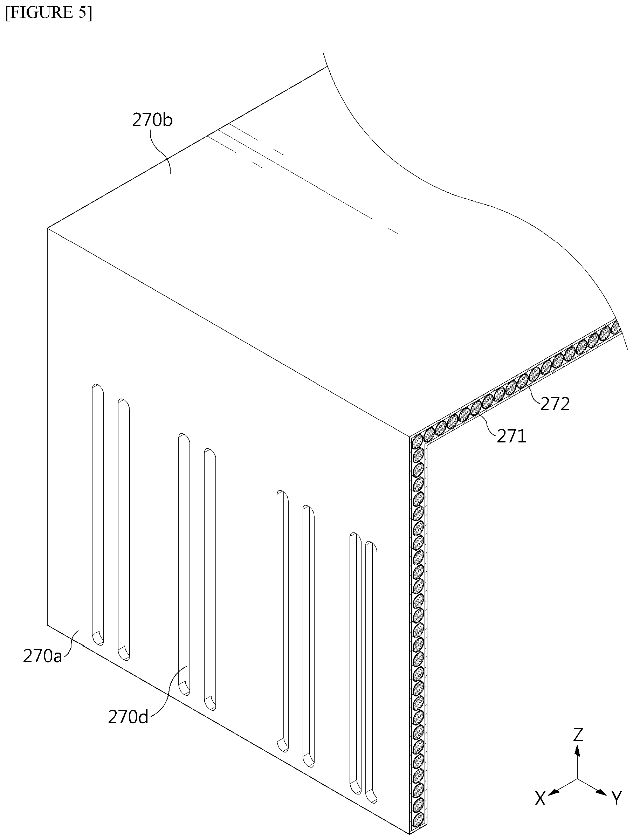

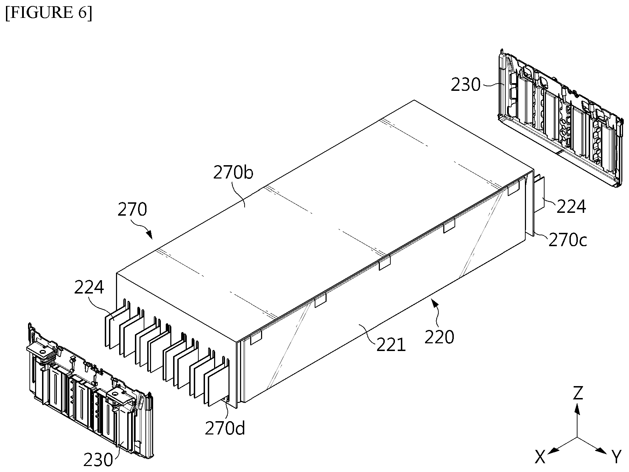

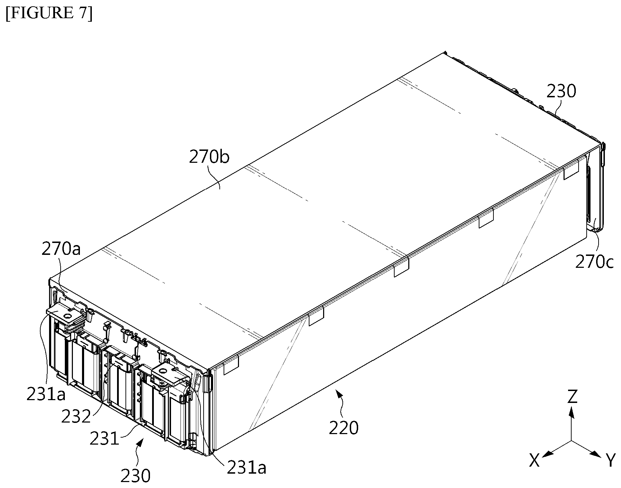

FIG. 3 is a drawing showing a fire extinguishing pad 270 of FIG. 2. FIG. 4 is a drawing showing that the fire extinguishing pad 270 of FIG. 3 is folded. FIG. 5 is a cross-sectional view taken along the line C-C' of FIG. 4. FIGS. 6 and 7 are drawings showing that a bus bar frame assembly 230 and a battery cell 220 are coupled.

Referring to FIGS. 3 to 7, the fire extinguishing pad 270 may include a case 271. The case 271 may provide a space therein. The fire extinguishing pad 270 may include a fire extinguishing member 272. The fire extinguishing member 272 may be located inside the case 271.

The case 271 may contain a thermoplastic material. The case 271 may contain an elastic material. For example, the case 271 may contain a silicone material. For example, the case 271 may contain a polyurethane material.

The fire extinguishing member 272 may contain a material capable of extinguishing fire. For example, the fire extinguishing member 272 may contain a nano-fluorinated ketone. For example, the fire extinguishing member 272 may contain FK-5-1-12.

The case 271 may be damaged or melted by the venting gas G. By damaging or melting the case 271, fire extinguishing member 272 may be injected toward the battery cell 220.

The fire extinguishing member 272 may be configured as a capsule. The fire extinguishing member 272 may be provided in plurality. The fire extinguishing member 272 may include a shell. Also, a fire extinguishing agent may be filled inside the shell. For example, the shell may contain a polymer material. The shell may be broken or melted by the venting gas G. By breaking or melting the shell, the fire extinguishing agent may be injected toward the battery cell 220.

The case 271 may contain a flexible material. The fire extinguishing pad 270 may be folded along the folding line FL. The fire extinguishing pad 270 may include a front part 270a. The front part 270a may be located between the front bus bar frame assembly 230 and the accommodation portion 221. The fire extinguishing pad 270 may include a top part 270b. The top part 270b may cover the upper surface of the battery cell 220. The top part 270b may be located between the battery cell 220 and the top plate 210a. The fire extinguishing pad 270 may include a rear part 270c. The rear part 270c may be located between the rear bus bar frame assembly 230 and the accommodation portion 221. The front part 270a, the top part 270b, and the rear part 270c may be formed integrally. The front part 270a, the top part 270b, and the rear part 270c may be formed by folding the fire extinguishing pad 270. The top part 270b may connect the front part 270a and the rear part 270c. The top part 270b may extend between the battery cell 220 and the top plate 210a.

The front part 270a may have a hole 270d. The front part 270a may have a plurality of holes 270d. The electrode lead 224 may pass through the hole 270d of the front part 270a. The plurality of holes 270d of the front part 270a may be provided to correspond to the plurality of electrode leads 224 in one-to-one relationship.

The rear part 270c may have a hole 270d. The rear part 270c may have a plurality of holes 270d. The electrode lead 224 may pass through the hole 270d of the rear part 270c. The plurality of holes 270d of the rear part 270c may be provided to correspond to the plurality of electrode leads 224 in one-to-one relationship.

The fire extinguishing pad 270 may cover the entire accommodation portion 221 by having the hole 270d.

Referring to FIGS. 6 and 7, the electrode leads 224 of the plurality of battery cells 220 may pass through the hole 270d of the front part 270a and the hole 270d of the rear part 270c. The plurality of electrode leads 224 may be folded after passing through the holes 270d and electrically connected to the bus bars 232 of the bus bar frame assembly 230.

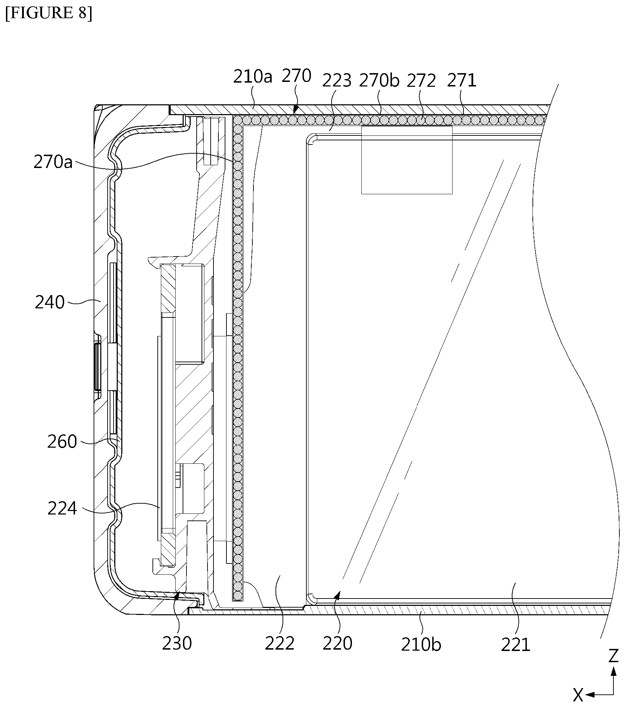

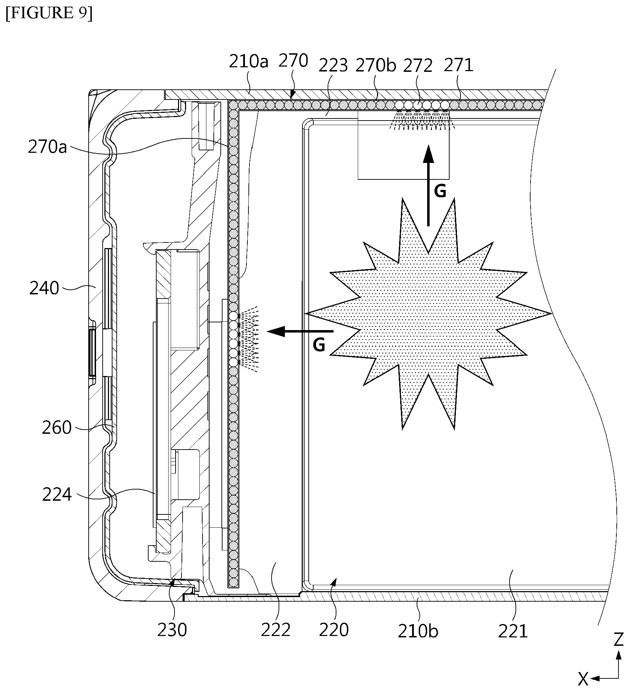

FIG. 8 is a cross-sectional view taken along the line A-A' of FIG. 1. FIG. 9 is a diagram showing the change in FIG. 8 when a thermal event occurs.

Referring to FIGS. 8 and 9, when a thermal event occurs from the battery cell 220, the venting gas G may melt or damage the front part 270a and the top part 270b. In addition, the fire extinguishing member 272 inside the fire extinguishing pad 270 may be injected toward the battery cell 220. The fire extinguishing member 272 may be quickly injected toward the battery cell 220 where the thermal event occurred.

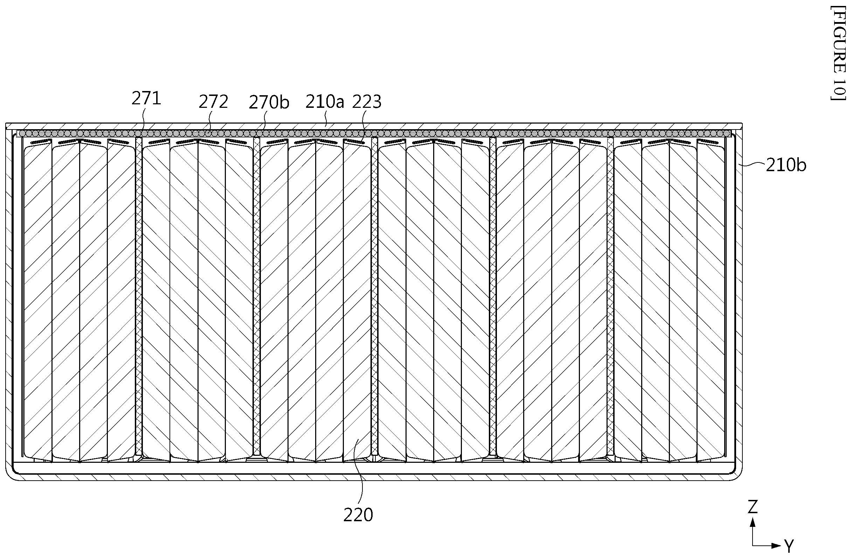

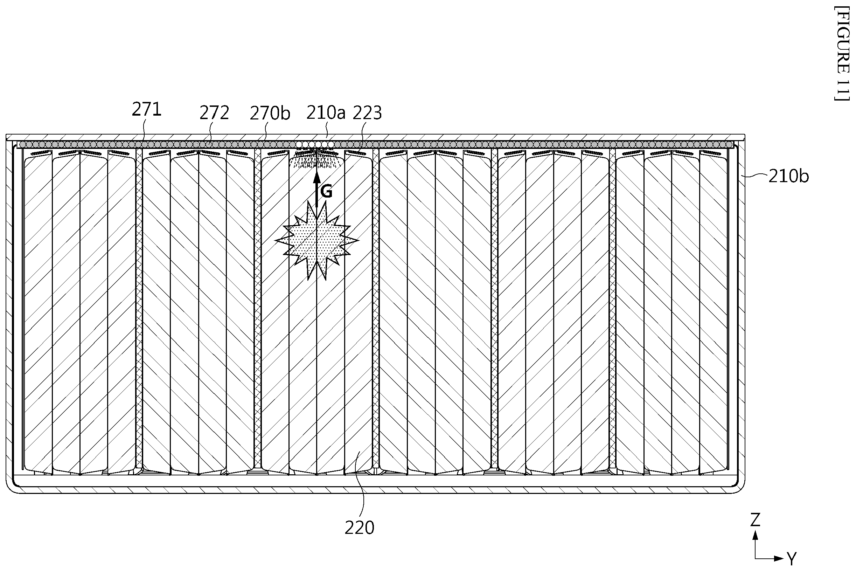

FIG. 10 is a cross-sectional view taken along the line B-B' of FIG. 1. FIG. 11 is a diagram showing the change in FIG. 10 when a thermal event occurs.

Referring to FIGS. 10 and 11, when a thermal event occurs from the battery cell 220, the venting gas G may melt or damage the top part 270b. Also, the fire extinguishing member 272 inside the fire extinguishing pad 270 may be injected toward the battery cell 220. The fire extinguishing member 272 may be quickly injected toward the battery cell 220 where the thermal event occurred.

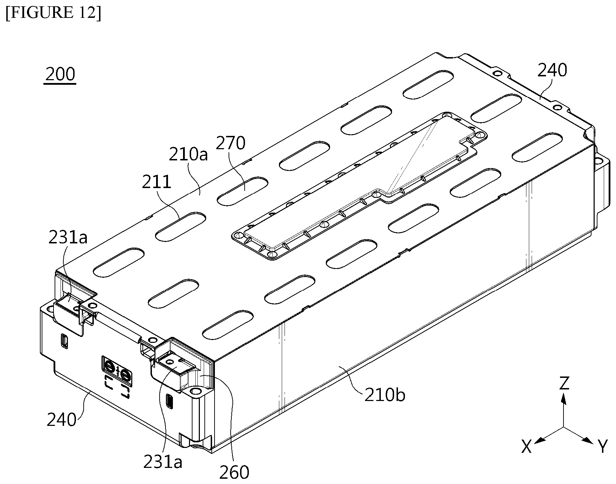

FIG. 12 is a drawing showing a modified embodiment of FIG. 1. Referring to FIG. 12, the top plate 210a of the battery module 200 may have a top venting hole 211. The top venting hole 211 may be provided in plurality. The top venting hole 211 may expose the fire extinguishing pad 270. The top venting hole 211 may expose the top part 270b.

When a thermal event occurs, the venting gas G may be discharged to the outside of the battery module 200 through the top venting hole 211. The fire extinguishing pad 270 is arranged in the flow path of the venting gas G, so that the fire extinguishing member 272 may be quickly injected.

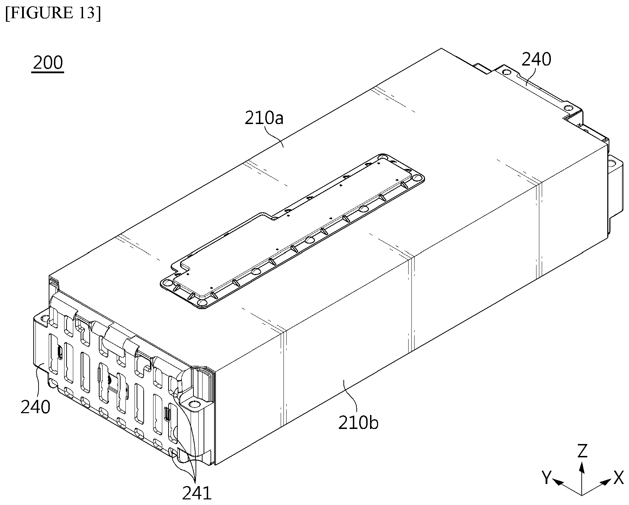

FIG. 13 is a drawing showing another modified embodiment of FIG. 1. Referring to FIG. 13, the end cover 240 may have an end venting hole 241. The rear end cover 240 may have an end venting hole 241. The end venting hole 241 may be provided in plurality.

When a thermal event occurs, the venting gas G may be discharged to the outside of the battery module 200 through the top venting hole 211. The fire extinguishing pad 270 is arranged in the flow path of the venting gas G, so that the fire extinguishing member 272 may be quickly injected.

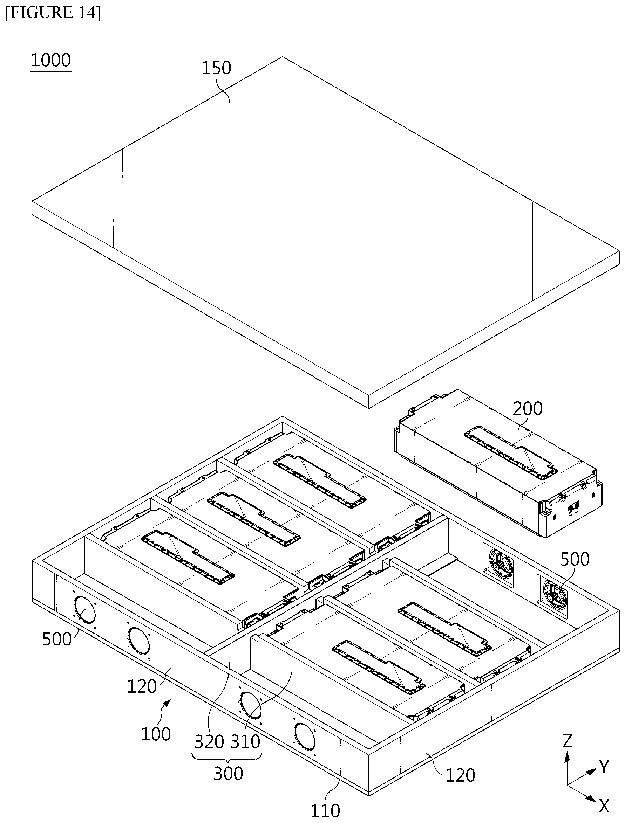

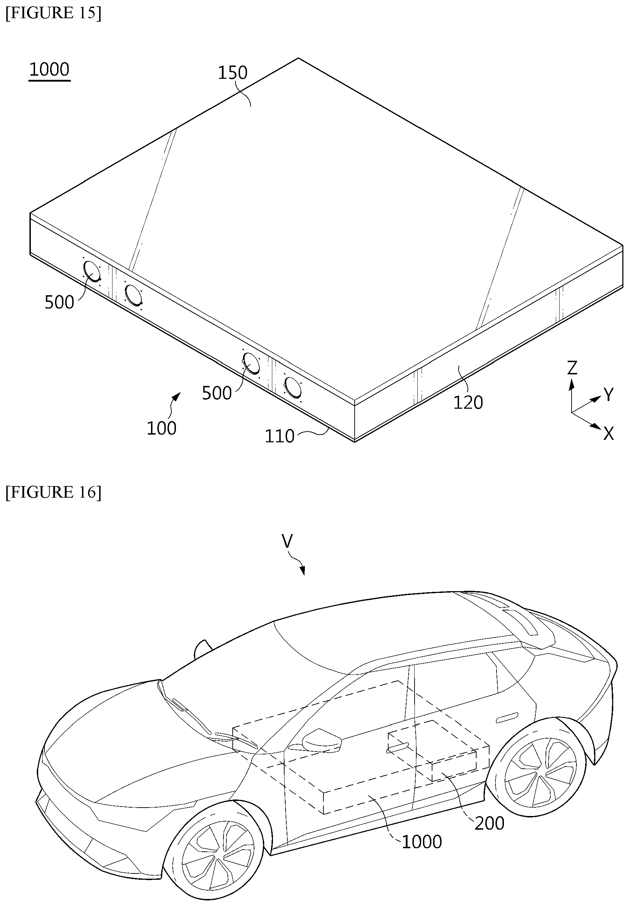

FIG. 14 is an exploded view showing some components of a battery pack 1000 according to an embodiment of the present disclosure. FIG. 15 is a diagram showing a battery pack 1000 according to an embodiment of the present disclosure.

Referring to FIGS. 14 and 15, the pack case 100 may provide a space therein. The pack case 100 may include a base plate 110, a side wall 120, and a pack cover 150. The base plate 110 may have a square shape. The base plate 110 may have a flat shape. The base plate 110 may form the outer appearance of the battery pack 1000. The base plate 110 may provide an inner space of the battery pack 1000.

The pack cover 150 may have a square plate shape. The pack cover 150 may have a flat plate shape. The pack cover 150 may form the outer appearance of the battery pack 1000. The pack cover 150 may cover the inner space of the battery pack 1000.

The battery module 200 may be located inside the pack case 100. The battery module 200 may be provided in plurality.

The partition wall 300 may include a first partition wall 310 and a second partition wall 320. The partition wall 300 may be provided in plurality. The partition wall 300 may be installed, fastened, fixed, coupled, or attached to the upper surface of the base plate 110. The partition wall 300 may partition the inner space of the battery pack 1000. The battery module 200 or the battery cell 220 may be located in the space partitioned by the partition wall 300.

The venting device 500 may be installed on the side wall 120. For example, the venting device 500 may be installed on the front side wall 120. For example, the venting device 500 may be a gas valve. The venting device 500 may open to discharge gas when the pressure inside the pack case 100 increases. In addition, the venting device 500 may block external air from flowing into the pack case 100. The venting device 500 may be provided in plurality.

In addition, the battery pack 1000 according to the present disclosure may further include components of the battery pack 1000 known at the time of filing of this application, such as a BMS, an inter bus bar, a relay, a current sensor, etc., in addition to the battery module 200.

FIG. 16 is a diagram showing a vehicle V according to an embodiment of the present disclosure.

Referring to FIG. 16, the battery module 200 according to the present disclosure or the battery pack 1000 according to the present disclosure may be applied to a vehicle V, such as an electric vehicle or a hybrid electric vehicle. That is, the vehicle V according to the present disclosure may include the battery module 200 according to the present disclosure or the battery pack 1000 according to the present disclosure. In addition, the vehicle V according to the present disclosure may further include various other components included in the vehicle in addition to the battery module 200 or the battery pack 1000. For example, the vehicle V according to the present disclosure may further include a body, a motor, a control device such as an ECU (electronic control unit), etc.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery module comprising:
a frame providing a space therein;
a battery cell located inside the frame and including an accommodation portion configured to accommodate an electrode assembly and an electrode lead configured to protrude from the accommodation portion;
a bus bar frame assembly located inside the frame and electrically connected to the battery cell; and
a fire extinguishing pad located between the bus bar frame assembly and the accommodation portion.

2. The battery module according to claim 1,
wherein the fire extinguishing pad includes:
a case providing a space therein; and
a fire extinguishing member located within the case.

3. The battery module according to claim 2,
wherein the fire extinguishing member is configured as a capsule.

4. The battery module according to claim 2,
wherein the case contains a flexible material.

5. The battery module according to claim 1,
wherein the fire extinguishing pad has a hole, and
wherein the electrode lead passes through the hole.

6. The battery module according to claim 5,
wherein the battery cell is provided in plurality, and
wherein the electrode leads of the plurality of battery cells pass through the fire extinguishing pad.

7. The battery module according to claim 1,
wherein the frame includes a top plate located on the battery cell, and
wherein the fire extinguishing pad extends between the top plate and the battery cell.

8. The battery module according to claim 7,
wherein the top plate has a top venting hole that exposes the fire extinguishing pad.

9. The battery module according to claim 1, further comprising:
an end cover coupled to the frame to cover the bus bar frame assembly and having an end venting hole.

10. A battery pack comprising the battery module according to any one of claims 1 to 9.

11. A vehicle comprising the battery module according to any one of claims 1 to 9.
